# EUROPEAN PATENT APPLICATION

(11) **EP 0 717 009 A1**
(43) Date of publication of application: **19.06.1996**
(21) Application number: 95308994.3
(22) Date of filing: 11.12.1995
(51) Int. Cl.: C02F 3/06, C02F 1/64

(54) **Water treatment process and apparatus**

(30) Priority: 13.12.1994 GB 9425172
(71) Applicant: ANGLIAN WATER SERVICES LTD., Huntingdon, Cambs. PE18 6NZ (GB)
(72) Inventor: Murrer, Edwin William John, Caldecote, Cambridge CB3 7NY (GB)
(74) Representative: Perry, Robert Edward

(57) **Abstract**

A water treatment process, for the removal of contaminants selected from manganese and ammonia, comprises passing the water through, from one side to another, an aerated packed bed of a buoyant plastics material.

## Description

### Field of the Invention

This invention relates to water treatment, including a process for obtaining potable water, and to apparatus for use in the treatment.

### Background of the Invention

Many water treatment processes are known. For potable water, the removal of contaminants presents considerable problems, often involving the use of chemicals or passage of the water through a packed bed that may be difficult to regenerate.

### Summary of the Invention

According to the present invention, it has been found that contaminants, in particular manganese and ammonia, e.g. as Mn and/or NH₄ ions, can be biologically removed from potable water by passage from one side to another of an aerated packed bed of a buoyant plastics material. The use of substantially horizontal flow through such a treatment stage is unusual.

The novel process defined above is preferably the second of a three-stage treatment process. Novel apparatus for use in such a process comprises three successive tanks, the first tank comprising a water inlet and adapted for water upflow and overflow into the second tank, the second tank comprising aeration means and providing a predominantly horizontal flow path and overflow into the third tank, the third tank comprising a settlement zone and an outlet. Each of the three tanks preferably includes a sludge bleed.

### Description of the Invention

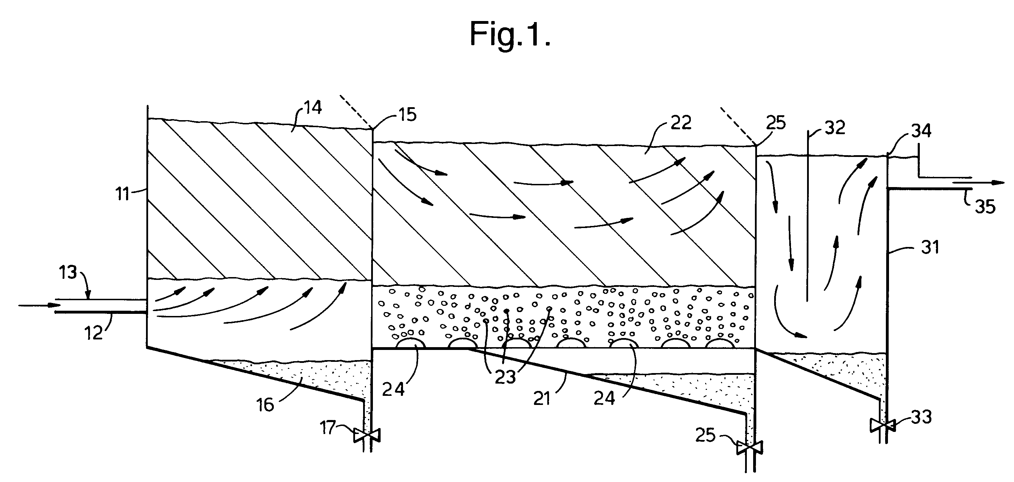

The invention will be described by way of example only with reference to the accompanying drawing, which is a schematic sectional side view of one embodiment of apparatus suitable for use in the process of the invention.

The essential characteristics of the illustrated process and apparatus are a first stage involving a component of upward water flow (often with an initial air injection but which may include some non-aerobic treatment), a second stage as defined above, including the use of aerators at the bottom of the tank, and a third, settlement stage. It will be readily appreciated that the apparatus is simple to construct and use.

More particularly, the drawing shows apparatus comprising a first tank 11 having an inlet 12 for water with an air injection inlet 13. Water to be treated passes in the direction of the arrows, and upwardly through a bed 14 of a buoyant plastics medium, and overflows via a weir 15. This first stage of treatment is designed for biological iron removal. Solids 16 accumulating at the base of the tank 11 can be removed via a sludge bleed 17.

A second tank 21 receives water flowing over the weir 15. This second tank is shallow relative to its depth, so that the water flow (indicated by arrows) is predominantly substantially horizontal, through a bed 22 of a buoyant plastics material. The bed 22 is aerated with bubbles 23 introduced via diffusers 24 connected, like the air injection inlet 13, to a source of air under pressure (not shown). Solids accumulating at the base of the tank 22 can be removed via a sludge bleed 25.

The second tank 21 provides the essential step of the present invention, and is designed for biological manganese and ammonia removal. The water thus treated overflows via a weir 25 into a third, settlement tank 31. The third tank includes a baffle 32 defining flow shown by the arrows, and a sludge bleed 33 for settled solids. Treated, potable water is obtained by overflow via a weir 34 and an outlet 35.

The buoyant plastics material is preferably of known type, on which a biofilm can grow, and may comprise internal surfaces which are not affected by attrition between pieces of the material. A preferred material is known as "Kaldnes media". This is a specific embodiment of the general requirement for a buoyant plastics material. The Kaldnes material, available from Kaldnes Miljøteknolji AS, comprises tubular plastics bodies, e.g. about 8 mm long and about 10 mm in diameter, having an exterior surface that is star-shaped in cross-section, i.e. with a plurality of parallel ribs. Other suitable buoyant materials are described in EP-A-0575314 and WO-A-9118658, the contents of which are incorporated herewith by reference. It is more generally preferred that such material should include recessed surfaces, adapted to retain microorganisms.

## Claims

1. A water treatment process, for the removal of contaminants selected from manganese and ammonia, the process comprising passing the water through, from one side to another, an aerated packed bed of a buoyant plastics material.

2. A process according to claim 1, wherein the aerated packed bed is the second stage of treatment, and water to be treated is introduced by overflow from a first stage adjacent to the one side.

3. A process according to claim 2, wherein the first stage comprises passing the water upwardly through a packed bed of a buoyant plastics material.

4. A process according to any preceding claim, wherein the treated water is allowed to overflow from the other side, to a further stage.

5. A process according to claim 4, wherein the further stage comprises settlement.

6. Water treatment apparatus comprising three successive tanks, the first tank comprising a water inlet and adapted for water upflow and overflow into the second tank, the second tank comprising aeration means and providing a predominantly horizontal flow path and overflow into the third tank, the third tank comprising a settlement zone and an outlet.

7. Apparatus according to claim 6, wherein each tank comprises a sludge bleed.
